# EUROPÄISCHE PATENTSCHRIFT

(11) **EP 1 735 735 B1**
(45) Veröffentlichungstag und Bekanntmachung des Hinweises auf die Patenterteilung: **12.12.2007**
(21) Anmeldenummer: 05732210.9
(22) Anmeldetag: 12.04.2005
(51) Int. Cl.: G06K 19/07, G06K 7/00

(54) **VERFAHREN UND VORRICHTUNG ZUM ERKENNEN VON FUNKTIONSZUSTÄNDEN IN RFID- ODER REMOTE-SENSOR-SYSTEMEN**
METHOD AND DEVICE FOR RECOGNIZING FUNCTIONAL STATES IN RFID SYSTEMS OR REMOTE SENSOR SYSTEMS
PROCEDE ET DISPOSITIF POUR RECONNAITRE DES ETATS FONCTIONNELS DANS DES SYSTEMES RFID ET DES SYSTEMES DE TELEDETECTION

(30) Priorität: 14.04.2004 DE 102004018558
(43) Veröffentlichungstag der Anmeldung: 27.12.2006
(73) Patentinhaber: ATMEL Germany GmbH, 74072 Heilbronn (DE)
(72) Erfinder: FRIEDRICH, Ulrich, 74248 Ellhofen (DE)
(86) Internationale Anmeldenummer: PCT/EP2005/003800
(87) Internationale Veröffentlichungsnummer: WO 2005/101302

(56) Entgegenhaltungen:
- GB-A- 2 308 947
- GB-A- 2 390 508
- US-B1- 6 712 276
- US-B1- 6 720 866

## Beschreibung

Die Erfindung betrifft ein Verfahren zum Erkennen von zeitvariablen Funktionszuständen in RFID-Systemen mit wenigstens einem Transponder oder Remote Sensor und wenigstens einer Basis-station, die mittels eines Trägersignals Daten und/oder Energie an den Transponder oder Sensor überträgt. Weiterhin betrifft die Erfindung eine Vorrichtung auf einem Transponder oder Remote Sensor zum zeitvariablen, prozessabhängigen Steuern einer Datenübertragung in RFID- oder Remote-Sensor-Systemen mit wenigstens einer Basisstation und wenigstens einem solchen Transponder oder Sensor.

In den letzten Jahren haben in vielen Dienstleistungsbereichen, in der Beschaffungs- und Distributionslogistik, im Handel sowie in der Produktion und in Materialflusssystemen automatische Identifizierungsverfahren, auch als Auto-ID bezeichnet, große Verbreitung gefunden. Ziel der Auto-ID ist die umfassende Bereitstellung von Informationen zu Personen, Tieren, Objekten und Waren.

Ein Beispiel für solche Auto-ID-Systeme sind die heute weit verbreiteten Chipkarten, bei denen ein Silizium-Speicherchip über eine mechanisch-galvanische Kontaktierung durch ein Lesegerät, die sog. Basisstation, mit Energie versorgt, ausgelesen und ggf. auch neu programmiert wird. Dabei wird das Erfassungsgerät regelmäßig als Lesegerät bezeichnet, unabhängig davon, ob damit Daten nur gelesen oder auch neu geschrieben werden können.

RFID-Systeme bestehen aus zwei grundlegenden Komponenten, nämlich dem Transponder bzw. dem Sensor im Falle eines Remote-Sensor-Systems, d.h. einem anwendungsspezifischen integrierten Schaltkreis (IC) mit einem Koppelelement, wie einer Dipolantenne als Sende- und Empfangsmittel, sowie aus der Basisstation, die typischerweise ein Hochfrequenzmodul (Sender-Empfänger) und ebenfalls ein Koppelelement aufweist. Daten werden sowohl von der Basisstation zum Transponder oder Sensor (Vorwärtsverbindung, *forward link*) als auch in umgekehrter Richtung (Rückverbindung, *return link*) übertragen.

Bei RFID-Systemen kann die Energieversorgung des Datenträgers - des Transponders oder Sensors - nicht allein durch galvanisches Kontaktieren sondern auch berührungslos unter Verwendung elektromagnetischer Felder im Radiobereich (*radio frequency*: RF) erfolgen. Transponder oder Sensoren oder jegliche eigene Energiequelle werden als "passive" Transponder oder Sensoren bezeichnet; solche mit (zusätzlicher) eigener Energieversorgung, z.B. durch eine Batterie, heißen "semi-passive" Transponder oder Sensoren.

Solche RFID-Systeme, deren Reichweite deutlich über 1 m liegt, arbeiten mit elektromagnetischen Wellen im UHF- und Mikrowellenbereich. Dabei kommt überwiegender Weise ein nach seiner physikalischen Funktionsweise als Backscatter-Prinzip bezeichnetes Rückstrahl-Verfahren zum Einsatz, im Zuge dessen ein Teil der von der Basisstation beim Transponder oder Sensor ankommenden Energie reflektiert (rückgestrahlt; sog. *Backscattering*) und dabei ggf. zur Datenübertragung moduliert wird: Der IC empfängt über das Koppelelement einen Hochfrequenz-Träger, im Folgenden auch als Trägersignal bezeichnet, den er durch geeignete Modulations- und Rückstreueinrichtungen teilweise an die Basisstation zurück überträgt.

Die vorstehend als Bestandteile eines derartigen Systems genannten Transponder und Sensoren werden üblicher Weise und im Folgenden verallgemeinernd auch als Tags bezeichnet.

Für bestimmte Anwendungen weisen die vorstehend beschriebenen Tags beschreibbare Speichermittel, wie ein EEPROM oder dgl., auf und sind dementsprechend durch ein geeignetes Kommando der Basisstation programmierbar. Dabei tritt in RFID-Anwendungen, insbesondere bei einem Einsatz von rein passiven Tags, regelmäßig beim Programmieren der Fall auf, dass zum Erzielen vergrößerter Programmierreichweiten zwecks Sicherstellung einer ausreichenden Energieversorgung über ein entsprechende Prozessdauer die zugeordnete Programmierzeit (-dauer) verlängert werden muss. Ein entsprechend ausgelegtes RFID-System muss dann im Steuerungsfall ausreichende Vorhaltezeiten reservieren, was in nachteiliger Weise zu einer Verlängerung der Kommunikation führt. Des weiteren kann die Programmierdauer auch bei einem Einsatz unterschiedlicher Speichertechnologien unterschiedlich sein. Weiterhin kann es bei Sensoranwendungen vorkommen, dass erst nach einer bestimmten, veränderlichen Zeit ein Messwert zur Verfügung steht.

Im Folgenden wird an Stelle von Abläufen wie einer Programmierung, einem Lesevorgang, einer Messung oder dgl. verallgemeinernd auch von "Prozessen" gesprochen. Unter einem Prozesszustand sei dabei ein quantitativer und/oder qualitativer Fortschritt des Prozesses, z.B. seine Beendigung, verstanden, insbesondere in Verbindung mit einer Bewertung des Prozess-Ergebnisses, wie "erfolgreich abgeschlossen" oder "nicht erfolgreich abgeschlossen".

Ein vorbekannter Ansatz zur Vermeidung des o.g. Nachteils ist die Verwendung sog. Autoinkrement- und Autodekrement-Techniken. Dabei wird nach Abschluss eines Prozesses, wie einer Programmierung, beispielsweise mittels eines gegenüber dem Prozess-Kommando verkürzten Kurz-Kommandos ein weiterer Datenstrom von der Basisstation an die Tags übermittelt, der anschließend sofort programmiert wird, ohne dass eine zugehörige (Speicher-)Adresse gesendet wird, da diese automatisch (per Autoinkrement/-dekrement) verändert wurde. Alternativ wird das gleiche Datum - ebenfalls mittels eines entsprechenden Kurz-Kommandos - in die nächste Adresse programmiert. Hierbei ist insbesondere als nachteilig anzusehen, dass nach Abschluss einer solchen Prozesssequenz der gesamte Speicher ausgelesen werden muss, um sicher zu stellen, dass alle Daten gespeichert wurden, was wiederum einen erheblichen zeitlichen Mehraufwand bedeutet. Zudem ist dann eine Übertragung mit Blick auf eine Qualität der Programmierung (Verweildauer, data *retention time*) nicht mehr möglich.

Im Palomar-Protokoll (vgl. ISO-submission ISO/IEC 18000-6 WD Mode3 vom 01. Februar 2002) wird nach einem Programmiervorgang in einem Statuswort eine Information betreffend die Qualität der Programmierung übertragen. Diese Technik setzt jedoch in nachteiliger Weise voraus, dass dieses Statuswort nach Abschluss der Programmierung auch tatsächlich abgefragt wird.

Aus der unveröffentlichten Patentanmeldung DE 103 56 259 (Anmeldetag: 03.12.2003) derselben Anmelderin ist ein Verfahren bekannt, durch das ein Tag automatisch die Programmierzeit an die Gegebenheiten des Feldes bzw. einer ihn versorgenden Energiequelle anpasst.

Die DE 101 38 217 A1 betrifft ein Verfahren, bei dem zur Übertragung von Daten mittels eines Kopfabschnitts im Datenprotokoll, mit dem eine Anzahl zur Kodierung im Datenbereich verwendeter Symbole und deren Kennung definiert wird, die Datenrate an die Kommunikationsbedingungen angepasst wird. Dabei kann die Datenrate wesentlich erhöht werden, indem beispielsweise bei großer Kommunikationsentfernung die Anzahl der Symbole verringert und/oder deren Kennung vereinfacht wird.

Weiterhin ist bei üblichen Programmieranwendungen bekannt, Daten im Anschluss an ihre Programmierung zur Kontrolle wieder auszugeben. Hierbei ist insbesondere als nachteilig anzusehen, dass sich auf diese Weise zwar überprüfen lässt, ob die Daten nunmehr vorhanden sind; Aussagen über die Verweildauer sind jedoch nicht ableitbar.

Eine weitere, naheliegende Lösung des oben genannten Problems besteht darin, nach einer Lastwechsel-Signatur im "Sendesignal" des Tags zu suchen: Wird ein rein passives Tag verwendet, so wirkt sich ein Belastungswechsel hinter dessen regelmäßig vorhandenen Gleichrichtmitteln zum Erzeugen einer Versorgungs-Gleichspannung aus der von der Basisstation ausgesandten Wechselfeld-Energie auf das o.g. Sendesignal (Rückstreusignal) des Tags aus. Nach dieser Änderung kann die Basisstation durch Beobachten ihres Empfangssignals suchen. Hierbei ist jedoch insbesondere als nachteilig anzusehen, dass einerseits in einer gestörten Umgebung ein einmaliger Lastwechsel nicht mit Sicherheit empfangen wird und dass andererseits bei semi-passiven Tags sich ein Lastwechsel nicht auf die Rückstreuung auswirkt, da die Energievorsorgung des Tags per definitionem nicht aus dem Feld erfolgt. Daher ist insbesondere in gemischten Systemen, d.h. Systemen, die sowohl passive als auch semi-passive Tags unterstützen, diese Art der Detektion nicht anwendbar.

Ist zudem ein zeitvariabler Prozess in das System integriert, z.B. rechnerische Bestimmung einer bestimmten Größe, Messen einer physikalischen Größe bei Sensoranwendungen oder dgl., der sich regelmäßig nur wenig auf das Lastverhalten und somit auf die Rückstreuung auswirkt, so ist ebenfalls eine Erkennung des Prozesszustands auf die oben skizzierte Weise nicht möglich.

Die GB 2 308 947 A, die GB 2 390 508 A, die US 6 720 866 B1 und die US 6 712 276 B1 betreffen Verfahren oder Vorrichtungen, bei denen Sensordaten von einem Transponder zu einer Basisstation übertragen werden.

Der Erfindung liegt die Aufgabe zugrunde, eine Überwachungsmöglichkeit für zeitvariable Prozesse in RFID- oder Remote-Sensor-Systemen zu schaffen, die die oben aufgeführten Nachteile des Standes der Technik vermeidet.

Die Aufgabe wird erfindungsgemäß gelöst durch ein Verfahren zum Erkennen eines Zustands eines Programmiervorgangs innerhalb eines Transponders oder Remote Sensors in RFID-Systemen mit dem wenigstens einen Transponder oder Remote Sensor und wenigstens einer Basisstation, die mittels eines Trägersignals Daten und/oder Energie an den Transponder oder Sensor überträgt, wobei der Programmiervorgang durch Senden eines Signals durch die Basisstation eingeleitet wird und nach Erreichen eines vorbestimmten Zustands des Programmiervorgangs wenigstens ein Quittungssymbol asynchron zu dem Signal der Basisstation durch den Transponder oder Sensor zur Basisstation übertragen wird.

Aufgrund der asynchronen Übertragung des Quittungssymbols ist eine zeitlich optimal flexible Anzeige eines Prozesszustands möglich, wobei zugleich durch den Verzicht auf von der Basisstation übertragene Synchronisationsmarken (sog. Notch-Signale, Modulationsdips) ein Störeinfluss auf parallel ablaufende Kommunikationen vermieden wird.

Weiterhin schafft die Erfindung zur Lösung der genannten Aufgabe eine Vorrichtung auf einem Transponder oder Remote Sensor zum zeitvariablen, prozessabhängigen Steuern einer Datenübertragung in RFID- oder Remote-Sensor-Systemen mit wenigstens einer Basisstation und wenigstens einem Transponder oder Remote Sensor, aufweisend: einen Oszillator zum Erzeugen eines Oszillator-Signals bei einer ersten Frequenz; einen Frequenzteiler zum Erzeugen eines Quittungssignals bei mindestens einer zweiten Frequenz aus dem Oszillator-Signal; und einen Modulator zum Erzeugen eines an die Basisstation in Abhängigkeit von einem Zustand eines Programmiervorgangs innerhalb des Transponders oder Remote Sensors zu übertragenden Quittungssymbols, wobei der Programmiervorgang durch Senden eines Signals durch die Basisstation eingeleitet wird und das Quittungssymbol asynchron zu dem Signal übertragen wird. Der vorstehend aufgeführte Frequenzteiler ist allerdings erfindungsgemäß nur dann notwendig vorhanden, wenn zum Übertragen des Quittungssymbols ein Hilfsträger ausgegeben werden soll (s.u.).

Bei Einsatz des erfindungsgemäßen Verfahrens, insbesondere unter Verwendung einer erfindungsgemäßen Vorrichtung, kann die Basisstation umgehend erkennen, in welchem Zustand sich ein bestimmter Prozess befindet, ohne dass hierfür auf unflexible und regelmäßig zeitlich ungünstige Voreinstellungen zurückzugreifen ist.

Nach einer Weiterbildung des erfindungsgemäßen Verfahrens, die insbesondere bei niederfrequenten Systemen, z.B. im Bereich von 125 kHz bzw. 13,56 MHz, zum Einsatz kommt, ist vorgesehen, dass eine Frequenz des Trägersignals zum Erzeugen eines Hilfsträgers geteilt und dieser als Quittungssymbol verwendet wird, wie weiter oben bereits angesprochen wurde. Alternativ wird zu diesem Zweck eine interne Oszillator-Frequenz des Transponders oder Sensors zum Erzeugen eines Hilfsträgers geteilt und dieser als Quittungssymbol verwendet.

Unter einem "Hilfsträger" wird im Folgenden nach dem Sprachgebrauch der Funktechnik eine zusätzlich eingeführte Taktfrequenz f_{H} verstanden, mit der beispielsweise im Zuge einer auf Lastmodulation eines Trägersignals basierenden Übertragung vom Tag zur Basisstation ein zu Modulationszwecken im Tag vorhandener zusätzlicher Lastwiderstand ein- und ausgeschaltet wird. Dabei entstehen zwei Spektrallinien im Abstand ±f_{H} um die Sendefrequenz fₛ (des Trägersignals) der Basisstation (s. Finkenzeller, RFID-Handbuch, 3. Aufl. (2002), Hanser, S. 44 ff.).

Nach einer äußerst bevorzugten Variante des erfindungsgemäßen Verfahrens wird in Abhängigkeit von dem Zustand des Programmiervorgangs ein jeweils vorbestimmter Hilfsträger als Quittungssymbol übertragen. War beispielsweise eine Programmierung des Tags erfolgreich und lässt sich eine bestimmte Verweildauer der Daten gewährleisten, so wird ein Hilfsträger einer ersten Frequenz f_{H1} verwendet; kann die Verweildauer nicht garantiert werden, so wird eine zweite Frequenz f_{H2} verwendet. Auf diese Weise bekommt die Basisstation immer ein eindeutiges Signal, auf dessen Grundlage sie vorbestimmte, weitere Prozessschritte einleiten kann. Eine Weiterbildung der erfindungsgemäßen Vorrichtung zeichnet sich entsprechend durch eine Modulations-Steuereinheit in Wirkverbindung mit dem Frequenzteiler zum Steuern der Frequenz des Quittungssignals aus, wobei weiterhin vorzugsweise eine Betriebsart und/oder Frequenz des Oszillators bzw. des Oszillator-Signals in Abhängigkeit von zeitvariablen Prozesszuständen steuerbar ist.

In Weiterbildung des erfindungsgemäßen Verfahrens kann vorgesehen sein, dass ein Teilerverhältnis von Trägersignal und Quittungssignal aus einem Symbol zwischen der Basisstation und dem Transponder oder Sensor übertragener Rückverbindungs-Kopfdaten abgeleitet wird. Somit lässt sich in einfacher Weise sicherstellen, dass sich der Hilfsträger jederzeit in einem bestimmten Frequenzbereich befindet, um insbesondere durch entsprechende Empfangseinrichtungen der Basisstation zuverlässig aufnehmbar zu sein. Nach einer ersten Weiterbildung des erfindungsgemäßen Verfahrens wird dabei eine in den Rückverbindungs-Kopfdaten enthaltene Definition eines logischen "0"-Symbols oder eines logischen "1"-Symbols zum Ableiten des Teilerverhältnisses - sofern ein Hilfsträger ausgegeben werden soll - oder direkt zum Erzeugen des Quittungssymbols verwendet. In letzterem Fall steht eine logische "0" für eine gescheiterte Prozessdurchführung; "1" bedeutet, dass der Prozess erfolgreich abgeschlossen wurde.

Alternativ kann ein in den Rückverbindungs-Kopfdaten enthaltenes Kodierungs-Referenzsymbol (vgl. z.B. ISO 18000-8 WD Mode3 vom 01. Februar 2002) zum Ableiten des Teilerverhältnisses verwendet werden. Nach einer anderen Variante kann auch ein Puls-Pausenverhältnis für die Übertragung des Quittungssymbols aus einem Symbol zwischen der Basisstation und dem Transponder oder Sensor übertragener Rückverbindungs-Kopfdaten abgeleitet werden, beispielsweise ein Verhältnis von 25% zu 75% einer zeitlichen Dauer des entsprechenden Symbols zum Übertragen einer logischen "0" und ein Verhältnis von 50% zu 50% für eine logische "1".

Vorzugweise endet erfindungsgemäß die Übertragung des Quittungssymbols nach einer vorbestimmen Anzahl von Übertragungsvorgängen, z.B. nach acht oder 16 Übertragungsvorgängen. Auf diese Weise ist es möglich zu erkennen, ob im Falle eines Vorhandenseins mehrerer Tags im Feld alle diese Tags die Prozessdurchführung bzw. die Übertragung des Quittungssymbols beendet haben.

Um weiterhin das Signal-Rauschverhältnis zu verbessern, kann bei Ableitung der Hilfsträger-Frequenz aus den vorstehend genannten Kopfdaten die Übertragung des Quittungssymbols erfindungsgemäß in vorteilhafter Weise durch die Basisstation gesteuert in einem Frequenzbereich mit geringer Rauschleistung erfolgen. Hierzu weist die erfindungsgemäße Vorrichtung in einer besonderen Ausgestaltung Speichermittel zum Speichern eines von der Basisstation empfangenen Zeitschritt-Signals zum Festlegen der Frequenz des Quittungssymbols auf.

Eine äußerst bevorzugte Weiterbildung des erfindungsgemäßen Verfahrens zeichnet sich dadurch aus, dass in dem Transponder oder Sensor zum Synchronisieren der Übertragung des Quittungssymbols ein vorgegebener Zeitschritt wiederholt weitergezählt wird, wobei der Zeitschritt vorzugsweise innerhalb einer Vorwärtsverbindung zwischen der Basisstation und dem Transponder oder Sensor vereinbart wird.

In bevorzugter Weiterbildung weist eine erfindungsgemäße Vorrichtung dementsprechend Zählermittel zum Weiterzählen des Zeitschritts zwecks Synchronisierung einer Übertragung des Quittungssymbols auf.

Wenn insbesondere das Weiterzählen auch bei konstantem Feld erfolgt, d.h. wenn keine Datenübertragung zum Tag stattfindet, ist es im Rahmen der Erfindung möglich, bei mehreren im Feld der Basisstation vorhandenen Tags eine im wesentlichen synchrone Übertragung des Quittungssignals zu erreichen. Auf diese Weise kann das Signal-Rauschverhältnis weiter verbessert werden. Dazu ist erfindungsgemäß weiterhin vorgesehen, dass die Übertragung des Quittungssymbols nach einer Zeit n × m × R1 nach Bereitstellung (Übertragen und Speichern) des Zeitschritts erfolgt, wobei n ∈ N, n > 0, R1 den Zeitschritt bezeichnet und der Wert von m von einer vereinbarten Kodierung des Quittungssymbols abhängt, z.B. m ∈ {1/4, 1/2, 1}.

Weiterhin besitzt eine erfindungsgemäße Vorrichtung im Zuge einer besonderen Ausgestaltung vorzugsweise Umschaltmittel, wie einen Multiplexer, zum Umschalten zwischen einem Daten-Modulationsstrom und einem Quittungs-Modulationsstrom des Transponders oder Sensors.

Weitere Eigenschaften und Vorteile der Erfindung ergeben sich aus der nachfolgenden Beschreibung von Ausführungsbeispielen anhand der Zeichnung. Es zeigt:
- Fig. 1: schematisch ein RFID-System mit einem Lesegerät und einer Anzahl von Tags (Transponder oder Remote Sensoren) im Ansprechbereich des Lesegeräts;
- Fig. 2: ein Blockschaltbild eines Tags gemäß der Fig. 1;
- Fig. 3: ein Blockschaltbild der Modulations-Steuereinheit aus Fig. 2;
- Fig. 4: in einer schematischen Darstellung von der Basisstation übertragene RückverbindungsKopfdaten; und
- Fig. 5: ein Ablaufdiagramm einer zeitvariablen Programmierung.

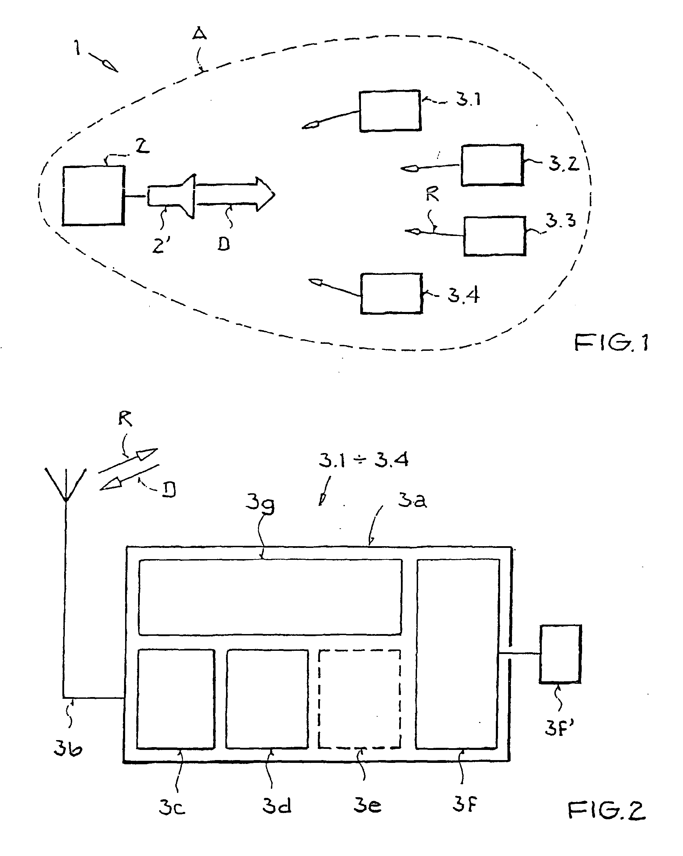

Die Fig. 1 zeigt ein RFID-System 1 mit einem Lesegerät 2 in Verbindung mit einem geeigneten Sende- und Empfangsmittel 2', wie einer Dipol-Antenne, und eine Anzahl von Transpondern 3.1-3.4, die sich gemeinsam in einem Ansprechbereich A des Lesegeräts 2 befinden.

Ein von dem Lesegerät 2 bzw. dem Sendemittel 2' ausgesendeter Datenstrom D wird dabei von allen Transpondern 3.1-3.4 gleichzeitig empfangen. Die Datenübertragung vom Lesegerät 2 zu einem Transponder 3.1-3.4 wird im Folgenden als Vorwärtsverbindung (*forward link*) bezeichnet. Die Transponder 3.1-3.4 antworten zumindest auf eine abgeschlossene Datenübertragung vom Lesegerät 2 über Rückverbindungen R (*return link*), wobei ein Teil der vom Lesegerät 2 zusammen mit den Daten D beim Transponder 3.1-3.4 ankommenden Energie reflektiert (rückgestrahlt; sog. *Backscattering*) und dabei ggf. zur Datenübertragung vom Transponder 3.1-3.4 zum Lesegerät 2 moduliert wird. Bei einem Einsatz Vollduplex-fähiger Systeme 1 (gleichzeitige Übertragung in der Vorwärts- und Rückverbindung) kann eine Datenübertragung zum Lesegerät 2 auch bereits während der Vorwärtsverbindung erfolgen.

Obwohl hier und im Folgenden teilweise nur von Transpondern die Rede ist, lässt sich die vorliegende Erfindung selbstverständlich auch in Systemen mit einer Anzahl von Remote Sensoren, ggf. auch in Verbindung mit einer Anzahl von Transpondern, einsetzen.

Die Fig. 2 zeigt schematisch anhand eines Blockschaltbilds einen Transponder 3.1-3.4 des RFID-Systems 1 der Fig. 1, hier in einer speziellen Ausgestaltung als Remote Sensor. Der Transponder/Sensor 3.1-3.4 weist demnach zumindest einen integrierten Schaltkreis (IC) 3a und als einzige äußere Beschaltung zum Senden und Empfangen von Daten D, R inkl. Befehlen bzw. Steuersignalen (z.B. Modulationsdips oder Notch-Signale) und ggf. Energie eine (Dipol-)Antenne 3b auf. Weiterhin besitzt der Transponder/Sensor 3.1-3.4 gemäß der Fig. 2, Speichermittel 3c, wie ein EEPROM, insbesondere zum Speichern von der Basisstation empfangener Daten, sowie Zählermittel 3d zum internen Weiterzählen von Zeitschritten (s.u.). Optional enthalten sind ferner Energie-Versorgungsmittel 3e, wie eine Batterie, wenn es sich um einen semi-passiven Transponder/Sensor 3.1-3.4 handelt, was in der Fig. 2 durch die gestrichelte Darstellung symbolisiert ist.

In Wirkverbindung mit Prozessführungs-/Rechenmitteln 3f weist der erfindungsgemäße Transponder/Sensor 3.1-3.4 weiterhin geeignete Sensormittel 3f' auf, beispielsweise Mittel zum Messen einer Umgebungstemperatur oder dergleichen. Die Prozessführungs-/Rechenmitteln 3f dienen dem Transponder/Sensor 3.1-3.4 nach Art einer *State-Machine* dazu, logische Verknüpfungen durchzuführen, und besitzen die zusätzliche Fähigkeit, Variablenzustände zu speichern. Bei dem gezeigten Ausführungsbeispiel können so von den Sensormitteln 3f' geliefert Messwerte verarbeitet, umgerechnet, gespeichert und ggf. bewertet werden. Wenn also der mit Hilfe der Sensormittel 3f' durchgeführte Messvorgang aufgrund möglicherweise in Abhängigkeit von Umgebungsparametern variabler Messdauer als in dem Transponder/Sensor 3.1-3.4 ablaufender, zeitvariabler Prozess angesehen wird, der sich insbesondere durch ein entsprechendes, von der Basisstation gesendetes Kommando initiieren lässt, so können mittels der Prozessführungs-/Rechenmittel 3f (State-Machine) Informationen betreffend einen (momentanen, zeitabhängigen) Zustand dieses Prozesses gewonnen werden. Derartige Informationen können einen Ablauf des Messvorgangs (abgeschlossen/nicht abgeschlossen) oder ein erhaltenes bzw. berechnetes Ergebnis betreffen (Ergebnis sinnvoll/fehlerhaft).

Ein weiteres, eingangs bereits angesprochenes Beispiel für einen in dem Transponder 3.1-3.4 ablaufenden, zeitvariablen Prozess, der mittels der Prozessführungs-/Rechenmittel 3f überwachbar ist, lässt sich ein Programmiervorgang, beispielsweise in den Speichermitteln 3c, anführen. Der Zeitbedarf für ein erfolgreiches Programmieren ist dabei eine Funktion mehrerer zeitlich variabler Faktoren, wie Feldstärke und -stabilität, Größe und Lage der Speichermittel 3c, garantierte Daten-Verweildauer etc. Der Programmiervorgang kann in Abhängigkeit von diesen Faktoren erfolgreich, bei zugleich ausreichender Verweildauer der programmierten Daten, oder nicht erfolgreich abgeschlossen sein (z.B. aufgrund einer unzureichenden Verweildauer).

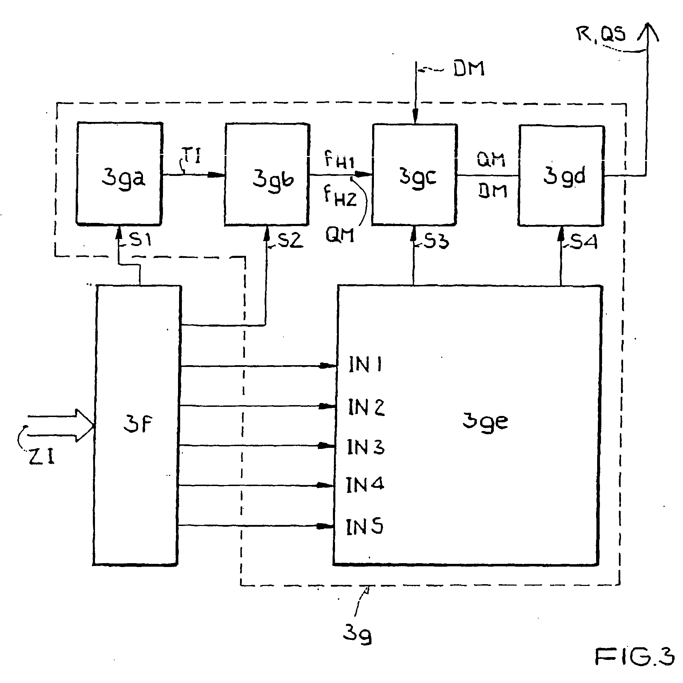

Schließlich besitzt der Transponder/Sensor 3.1-3.4 in der gezeigten Ausgestaltung eine Modulations-Steuereinheit 3g, die weiter unten anhand der Fig. 3 näher erläutert wird.

Die Fig. 3 zeigt detailliert die Modulations-steuereinheit 3g aus Fig. 2 in Wirkverbindung mit den vorstehend bereits besprochenen Prozessführungs-/Rechenmitteln 3f, der State-Machine. Demgemäss weist die Modulations-Steuereinheit 3g (zumindest bei Hochfrequenz-Anwendungen; s.o.) zunächst einen internen Oszillator 3ga auf, der beispielsweise als RC-Oszillator ausgeführt sein kann und dessen Frequenz oder Betriebszustand (an/aus) durch die State-Machine 3f steuerbar ist (Pfeil S1 in Fig. 3). Weiterhin enthalten ist ein Frequenzteiler 3gb in Wirkverbindung einerseits mit dem Oszillator 3ga und andererseits mit einem Multiplexer 3gc. Auch der Frequenzteiler 3gb ist mittels eines weiteren Steuersignals S2 durch die State-Machine 3f steuerbar.

Der Multiplexer 3gc besitzt gemäß der Darstellung in Fig. 3 wenigstens noch einen weiteren Eingang für einen Daten-Modulationsstrom DM der vom Transponder/Sensor an die Basisstation zu übertragenden Daten.

Dem Multiplexer 3gc nachgeschaltet weist die erfindungsgemäße Modulations-Steuereinheit 3g einen Modulator 3gd auf, der zum Modulieren eines Trägersignals (nicht gezeigt) der Basisstation zwecks Übertragung von Daten durch den Transponder/Sensor 3.1-3.4 (Fig. 2) über die Rückverbindung R zur Basisstation 2 ausgebildet ist. Dabei können grundsätzlich alle gängigen Modulationsarten zum Einsatz kommen, indem beispielsweise der Real- und/oder Imaginärteil der Eingangsimpedanz des Tags verändert wird. Der Veränderung des Realteils entspricht eine Lastmodulation (auch: ASK; Amplitudentastung); die Veränderung des Imaginärteils bewirkt eine Phasenmodulation (PSK; Phasenumtastung). In der Praxis werden diese Modulationsarten gemischt verwendet. Schließlich besitzt die Modulations-Steuereinheit Steuermittel 3ge in Wirkverbindung mit der State-Machine 3f, die ihrerseits zum Steuern des Multiplexers 3gc (Steuersignal S3) und des Modulators 3gd (Steuersignal S4) eingerichtet ist.

Der Oszillator 3ga liefert gemäß der Fig. 3 eine Taktinformation TI bei einer ersten Frequenz, die gemäß der gezeigten Ausführungsform dem Frequenzteiler 3gb zugeführt wird. Am Ausgang des Teilers steht erfindungsgemäß eine Hilfsträger-Frequenz f_{H1}, f_{H2} (s.o.) als Quittungssignal zur Verfügung, die über die State-Machine 3f (Steuersignal S2) von Zustandsinformationen ZI des zeitvariablen Prozesses gesteuert wird und somit einen Quittungs-Modulationsstrom QM für eine Modulation des Trägersignals durch den Modulator 3gd darstellt. Der Multiplexer 3gc schaltet erfindungsgemäß nach Maßgabe der Steuermittel 3ge (Steuersignal S3) zwischen dem Daten-Modulationsstrom DM und dem Quittungs-Modulationsstrom QM um und gibt ggf. über das Steuersignal S4 die entsprechende Modulation durch den Modulator 3gd frei, um der Basisstation den Prozesszustand des Tags durch Übertragung eines entsprechenden Quittungssymbols QS anzuzeigen. Hierzu empfangen die Steuermittel 3ge beim dargestellten Ausführungsbeispiel von der State-Machine 3f Eingangssignale (Inputsignale) IN1-INS, mit der Zuordnung:

| | |
|---|---|
| IN1 | zeitvariabler Prozess (Programmierung, Messvorgang, ...) abgeschlossen; |
| IN2 | zeitvariabler Prozess erfolgreich abgeschlossen (ausreichende Verweildauer, zulässiges Messergebnis, ...); |
| IN3 | zeitvariabler Prozess nicht erfolgreich abgeschlossen; |
| IN4 | Datenmodulation freigegeben; |
| IN5 | Quittungsmodulation freigegeben. |

Bei einfacheren, hier nicht gezeigten Versionen der erfindungsgemäßen Vorrichtung können die Signale IN2, IN3 entfallen. Die eigentliche Ablaufsteuerung (Prozess- bzw. Quittungsbeginn; vgl. auch Fig. 5) erfolgt in der State-Machine 3f.

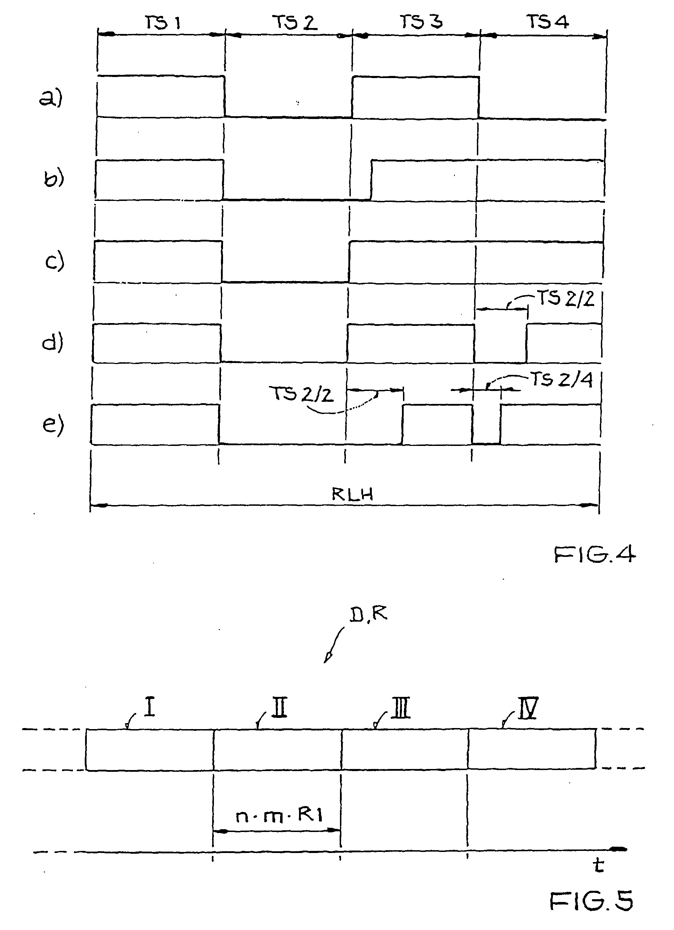

Die Fig. 4 illustriert, wie erfindungsgemäß von der Basisstation übertragene Rückverbindungs-Kopfdaten RLH, der sog. *return link header*, zum Festlegen des in dem Frequenzteiler 3gb verwendeten Teilerverhältnisses zum Erzeugen der Frequenzen f_{H1}, f_{H2} aus der internen Oszillatorfrequenz benutzt werden, um so sicher zu stellen, dass sich der Hilfsträger immer in einem bestimmten Frequenzbereich befindet. Mit den Rückverbindungs-Kopfdaten RLH überträgt die Basisstation gemäß der unveröffentlichten Patentanmeldung DE 10 2004 013156 (Anmeldetag 17.03.2004) derselben Anmelderin, die insoweit durch Bezugnahme zum Inhalt dieser Anmeldung gemacht wird, vorzugsweise Modulationsreferenzen und weitere Steuersymbole, beispielsweise für Antikollisions-Routinen.

In der Fig. 4 ist bei a) das zu sendende Kopfdaten-Signal (level2send) mit vier Teilsymbolen TS1-TS4 dargestellt, das insbesondere als zweites Teilsymbol TS2 eine Zeitreferenz für die Datenstrom-Modulation in der Rückverbindung R vom Tag zur Basisstation enthält. Darunter dargestellt ist das entsprechend modulierte Signal in verschiedenen Modulationsarten:
b) NRZI-Kodierung (Non-Return-to-Zero-Inverted: logisch "1" entspricht einer Änderung des Modulationszustands; bei "0" keine Änderung);
c) soft-NRZI-Kodierung (NRZI-Kodierung mit zeitlich versetztem Flankenwechsel);
d) FMO-Kodierung ("0" entspricht einer beliebigen Flanke in der Mitte eines Bit-Intervalls der Länge TS2, "1" einer Flanke am Intervallende); und
e) 3phasel-Kodierung (Wertigkeit eines Zeichens abhängig vom zeitlichen Abstand zu einer Synchronisationsmarke (Notch) der Basisstation; hier: "1" entspricht einem Abstand TS2/2, "0" entspricht TS2/4).

Erfindungsgemäß wird nun die Zeitreferenz aus den Kopfdaten RLH zum Ableiten der Hilfsträger-Frequenz für das an die Basisstation zu übertragende Quittungssymbol QS (Fig. 3) verwendet. Dies kann entweder direkt aus dem Teilsymbol TS2 geschehen, oder je nach Kodierungsvereinbarung aus einem logischen "1"- oder "0"-Symbol, wie oben beschrieben. Des weiteren kann das Teilsymbol TS2 bei entsprechender Auswahl zum Festlegen eines Puls-Pausenverhältnisses für den Hilfsträger heran gezogen werden.

Um das Signal-Rauschverhältnis der Quittungs-Übertragung zu verbessern, wird erfindungsgemäß vorzugsweise weiterhin wie in der Fig. 5 gezeigt vorgegangen:
Die Fig. 5 zeigt den zeitlichen Verlauf eines in einem Transponder ablaufenden zeitvariablen Prozesses, z.B. einer Programmierung. Zunächst wird während eines ersten Zeitraumes I durch den Transponder ein Datenstrom D mit Daten und Zeitreferenzen (z.B. TS2; vgl. Fig. 4) empfangen. Eine dieser Zeitreferenzen, hier: das Teilsymbol TS2 gemäß der Fig. 4, wird als Zeitschritt-Referenz R1 in dem Transponder gespeichert, z.B. in den Speichermitteln 3c (Fig. 2). Anschließend erfolgt während des Zeitraums II die Programmierung, wobei der Zeitschritt R1 durch die Zählermittel 3d weitergezählt wird, auch wenn die Basisstation ein konstantes Feld aussendet, d.h. keine Informationsübertragung zum Transponder stattfindet. Da es sich bei Programmiervorgängen oder dgl., wie bereits gesagt, um zeitvariable Prozesse handelt, schließt sich erfindungsgemäß an den Programmiervorgang (Abschnitt II) während des folgenden Zeitraums III ein Quittungsabschnitt an. Die Quittierung, d.h. die Freigabe der entsprechenden Modulation durch die Steuermittel 3ge (Fig. 3) zur Übertragung des Quittungssymbols QS erfolgt nach einer Zeit n × m × R1 nach Bereitstellung (Empfang, Speicherung) des Zeitschritts R1, wobei n ∈ N, n > 0, ist. Der Wert von m hängt von einer vereinbarten Kodierung des Quittungssymbols QS ab, z.B. m ∈ {1/4, 1/2, 1}, wobei die exemplarisch aufgeführten Werte gemäß den obigen Ausführungen zur Fig. 4 für eine 3phase1-Kodierung (Teildarstellung e) in Fig. 4), eine FM0-Kodierung (d) bzw. eine (hard-)NRZI-Kodierung (c) stehen, wenn zugleich eine Referenz für die Baudrate im Falle asynchroner Übertragung gleich der Zeitreferenz für die Flankensteuerung ist.

Auf diese Weise beginnt die Übertragung des Quittungssymbols QS bei Anwesenheit mehrerer Transponder 3.1-3.4 im Feld einer Basisstation 2 (Fig. 1) im wesentlichen (raster-)synchron, so dass sich ein verbessertes Signal-Rauschverhältnis ergibt.

Nach empfangener Quittierung durch die Basisstation empfängt der Transponder während des Zeitraums IV zeitvariabel weitere Befehle (Daten).

Die wesentlichen Vorteile der vorliegenden Erfindung sind die folgenden:
- Bei zeitvariablen Prozessen muss für die zeitliche Steuerung kein ungünstiges "*worst case*"-Szenario vorgehalten werden, da Anfang und Ende des Prozesses sowie sein Zustand für die Basisstation klar erkennbar sind.
- Die Steuerung von RFID- oder Remote-Sensor-Systemen wird so schneller und sicherer, was eine Kostenersparnis bedeutet.
- Das bislang praktizierte Auslesen von Daten nach einer Programmierung kann entfallen, da die Datenintegrität regelmäßig schon durch eine Auswertung von Sicherungszeichen, z.B. eine CRC-Auswertung, sichergestellt wurde: Wenn der Datenstrom von der Basisstation an ein Tag übertragen wird, liefert die Basisstation auch Sicherungszeichen, die bei nicht erfolgter Fehleranzeige ebenfalls programmiert werden. Daher genügt es in den meisten Fällen zu wissen, dass die Programmierung ordnungsgemäß verlaufen ist.
- Durch Verwendung einer Teilsymbol-Definition aus den Kopfdaten besteht die Möglichkeit einer einfachen Bandbreiten-Kontrolle.
- Bei beginnender Quittierung nach einer einheitlichen Zeit n × m × R1 ergibt sich ein günstiges Signal-Rauschverhältnis.

### Bezugszeichenliste

- 1: RFID-System
- 2: Basisstation
- 2': Sende- und Empfangsmittel
- 3.1-3.4: Transponder/Sensor
- 3a: integrierter Schaltkreis
- 3b: Antenne
- 3c: Speichermittel
- 3d: Zählermittel
- 3e: Batterie
- 3f: State-Machine
- 3f': Sensormittel
- 3g: Modulations-Steuereinheit
- 3ga: Oszillator
- 3gb: Frequenzteiler
- 3gc: Multiplexer
- 3gd: Modulator
- 3ge: Steuermittel
- I-IV: Zeitraum
- A: Ansprechbereich, Feld
- D: Datenstrom
- DM: Daten-Modulationsstrom
- f_{H1}, f_{H2}: Hilfsträger(-Frequenz)
- IN1-IN5: Input-Signal
- m: Zahlenwert
- n: natürliche Zahl (> 0)
- QM: Quittungs-Modulationsstrom
- QS: Quittungssymbol
- R: Rückverbindung
- R1: Zeitschritt
- RLH: Rückverbindungs-Kopfdaten
- S1-S4: Steuersignal
- t: Zeit
- TI: Taktinformation
- TS1-TS4: Teilsymbol
- ZI: Zustandsinformation

## Patentansprüche

1. Verfahren zum Erkennen eines Zustands eines Programmiervorgangs innerhalb eines Transponders oder Remote Sensors in RFID-Systemen mit dem wenigstens einen Transponder oder Remote Sensor und wenigstens einer Basisstation, die mittels eines Trägersignals Daten und/oder Energie an den Transponder oder Sensor überträgt, wobei der Programmiervorgang durch Senden eines Signals durch die Basisstation eingeleitet wird und nach Erreichen eines vorbestimmten Zustands des Programmiervorgangs wenigstens ein Quittungssymbol asynchron zu dem Signal der Basisstation durch den Transponder oder Sensor zur Basisstation übertragen wird.

2. Verfahren nach Anspruch 1, **dadurch gekennzeichnet, dass** eine Frequenz des Trägersignals zum Erzeugen eines Hilfsträgers geteilt und dieser als Quittungssymbol verwendet wird.

3. Verfahren nach Anspruch 1, **dadurch gekennzeichnet, dass** eine interne Oszillator-Frequenz des Transponders oder Sensors zum Erzeugen eines Hilfsträgers geteilt und dieser als Quittungssymbol verwendet wird.

4. Verfahren nach einem der Ansprüche 1 bis 3, **dadurch gekennzeichnet, dass** in Abhängigkeit von dem Zustand des Programmiervorgangs ein jeweils vorbestimmter Hilfsträger als Quittungssymbol übertragen wird.

5. Verfahren nach einem der Ansprüche 1 bis 4, **dadurch gekennzeichnet, dass** ein Teilerverhältnis von Trägersignal und Quittungssignal oder das Quittungssymbol selbst aus einem Symbol zwischen der Basisstation und dem Transponder oder Sensor übertragener Rückverbindungs-Kopfdaten abgeleitet wird.

6. Verfahren nach Anspruch 5, **dadurch gekennzeichnet, dass** eine in den Rückverbindungs-Kopfdaten enthaltene Definition eines logischen "0"-Symbols oder eines logischen "1"-Symbols zum Ableiten des Teilerverhältnisses verwendet wird.

7. Verfahren nach Anspruch 5, **dadurch gekennzeichnet, dass** ein in den Rückverbindungs-Kopfdaten enthaltenes Kodierungs-Referenzsymbol zum Ableiten des Teilerverhältnisses verwendet wird.

8. Verfahren nach einem der Ansprüche 1 bis 7, **dadurch gekennzeichnet, dass** ein Puls-Pausenverhältnis für die Übertragung des Quittungssymbols aus einem Symbol zwischen der Basisstation und dem Transponder oder Sensor übertragener Rückverbindungs-Kopfdaten abgeleitet wird.

9. Verfahren nach einem der Ansprüche 1 bis 8, **dadurch gekennzeichnet, dass** die Übertragung des Quittungssymbols durch die Basisstation gesteuert in einem Frequenzbereich mit geringer Rauschleistung erfolgt.

10. Verfahren nach einem der Ansprüche 1 bis 9, **dadurch gekennzeichnet, dass** in dem Transponder oder Sensor zum Synchronisieren der Übertragung des Quittungssymbols ein vorgegebener Zeitschritt wiederholt weitergezählt wird.

11. Verfahren nach Anspruch 10, **dadurch gekennzeichnet, dass** der Zeitschritt innerhalb einer Vorwärtsverbindung zwischen der Basisstation und dem Transponder oder Sensor vereinbart wird.

12. Verfahren nach Anspruch 10 oder 11, **dadurch gekennzeichnet, dass** die Übertragung des Quittungssymbols nach einer Zeit n × m × R1 nach Bereitstellung des Zeitschritts erfolgt, wobei n ∈ N, n > 0, R1 den Zeitschritt bezeichnet und der Wert von m von einer vereinbarten Kodierung des Quittungssymbols abhängt, z.B. m ∈ {1/4, 1/2, 1}.

13. Verfahren nach einem der Ansprüche 1 bis 12, **dadurch gekennzeichnet, dass** die Basisstation in Abhängigkeit von dem Quittungssymbol vorbestimmte weitere Prozessschritte einleitet.

14. Vorrichtung auf einem Transponder (3.1-3.4) oder Remote Sensor zum zeitvariablen, prozessabhängigen Steuern einer Datenübertragung in RFID- oder Remote-Sensor-Systemen (1) mit wenigstens einer Basisstation (2) und wenigstens einem Transponder (3.1-3.4) oder Remote Sensor, aufweisend:
- einen Oszillator (3ga) zum Erzeugen eines Oszillator-Signals bei einer ersten Frequenz (TI);
- einen Frequenzteiler (3gb) zum Erzeugen eines Quittungssignals bei mindestens einer zweiten Frequenz (f_{H1}, f_{H2}) aus dem Oszillator-Signal; und
- einen Modulator (3gd) zum Erzeugen eines an die Basisstation (2) in Abhängigkeit von einem Zustand eines Programmiervorgangs innerhalb des Transponders oder Remote Sensors zu übertragenden Quittungssymbols (QS), wobei der Programmiervorgang durch Senden eines Signals durch die Basisstation eingeleitet wird und das Quittungssymbol (QS) asynchron zu dem Signal übertragen wird.

15. Vorrichtung nach Anspruch 14, **gekennzeichnet durch** eine Modulations-Steuereinheit (3g) in Wirkverbindung mit dem Frequenzteiler (3gb) zum Steuern der Frequenz (f_{H1}, f_{H2}) des Quittungssignals.

16. Vorrichtung nach Anspruch 14 oder 15, **dadurch gekennzeichnet, dass** eine Betriebsart und/oder Frequenz des Oszillators (3ga) bzw. des Oszillator-Signals in Abhängigkeit von dem Zustand des Programmiervorgangs steuerbar ist.

17. Vorrichtung nach einem der Ansprüche 14 bis 16, **gekennzeichnet durch** Umschaltmittel (3gc) zum Umschalten zwischen einem Daten-Modulationsstrom (DM) und einem Quittungs-Modulationsstrom (QM) des Transponders (3.1-3.4) oder Sensors.

18. Vorrichtung nach einem der Ansprüche 14 bis 17, **gekennzeichnet durch** Speichermittel (3gc) zum Speichern eines von der Basisstation (2) empfangenen Zeitschritt-Signals (TS2) zum Festlegen der Frequenz (f_{H1}, f_{H2}) des Quittungssymbols (QS).

19. Vorrichtung nach Anspruch 18, **gekennzeichnet durch** Zählermittel (3d) zum Weiterzählen des Zeitschritts (R1) zwecks Synchronisierung einer Übertragung des Quittungssymbols (QS).

## Claims

1. Method for recognition of a state of a programming process within a transponder or remote sensor in RFID systems with the at least one transponder or remote sensor and at least one base station, which transmits data and/or energy to the transponder or sensor by means of a carrier signal, wherein the programming process is initiated by transmission of a signal by the base station and after reaching a predetermined state of the programming process at least one acknowledgement symbol is transmitted by the transponder or sensor to the base station asynchronously with respect to the signal of the base station.

2. Method according to claim 1, **characterised in that** a frequency of the carrier signal is divided in order to produce an auxiliary carrier and this is used as acknowledgement symbol.

3. Method according to claim 1, **characterised in that** an internal oscillator frequency of the transponder or sensor is divided for producing an auxiliary carrier and this is used as acknowledgement symbol.

4. Method according to one of claims 1 to 3, **characterised in that** a respective predetermined auxiliary carrier is transmitted as acknowledgement symbol in dependence on the state of the programming process.

5. Method according to one of claims 1 to 4, **characterised in that** a division ratio of carrier signal and acknowledgement signal or the acknowledgement symbol itself is derived from a symbol of feedback head data transmitted between the base station and the transponder or sensor.

6. Method according to claim 5, **characterised in that** a definition, which is contained in the feedback head data, of a logical '0' symbol or a logical '1' symbol is used for derivation of the divider ratio.

7. Method according to claim 5, **characterised in that** a coding reference symbol contained in the feedback head data is used for derivation of the divider ratio.

8. Method according to one of claims 1 to 7, **characterised in that** a pulse/pause ratio for the transmission of the acknowledgement symbol is derived from a symbol of feedback head data transmitted between the base station and the transponder sensor.

9. Method according to one of claims 1 to 8, **characterised in that** the transmission of the acknowledgement symbol is carried out by the base station in controlled manner in a frequency range with low noise output.

10. Method according to one of claims 1 to 9, **characterised in that** a predetermined time step is repeatedly counted onward in the transponder or sensor for synchronisation of the transmission of the acknowledgement symbol.

11. Method according to claim 10, **characterised in that** the time step is combined within a forward connection between the base station and the transponder or sensor.

12. Method according to claim 10 or 11, **characterised in that** the transmission of the acknowledgement symbol takes place after a time n x m x R1 after provision of the time step, wherein n ∈ N, n > 0 and R1 denotes the time step and the value of m depends on an agreed coding of the acknowledgement symbol, for example m ∈ {1/4, 1/2,1}.

13. Method according to one of claims 1 to 12, **characterised in that** the base station initiates predetermined further process steps in dependence on the acknowledgement symbol.

14. Device on a transponder (3.1 - 3.4) or remote sensor for time-variable, process-dependent controlling of a data transmission in RFID systems or remote sensor systems (1) with at least one base station (2) and at least one transponder (3.1 - 3.4) or remote sensor, comprising:
- an oscillator (3ga) for producing an oscillator signal at a first frequency (TI);
- a frequency divider (3gb) for producing an acknowledgement signal at at least one second frequency (f_{H1}, f_{H2}) from the oscillator signal; and
- a modulator (3gd) for producing an acknowledgement symbol (QS) to be transmitted to the base station (2) in dependence on a state of a programming process within the transponder or remote sensor, wherein the programming process is initiated by transmission of a signal by the base station and the acknowledgement symbol (QS) is transmitted asynchronously with respect to the signal.

15. Device according to claim 14, **characterised by** a modulation control unit (3g) in operative connection with the frequency divider (3gb) for controlling the frequency (f_{H1}, f_{H2}) of the acknowledgement signal.

16. Device according to claim 14 or 15, **characterised in that** a mode of operation and/or frequency of the oscillator (3ga) or of the oscillator signal is controllable in dependence on the state of the programming process.

17. Device according to one of claims 14 to 16, **characterised by** switch-over means (3gc) for switching over between a data modulation current (DM) and an acknowledgement modulation current (QM) of the transponder (3.1 - 3.4) or sensor.

18. Device according to one of claims 14 to 17, **characterised by** memory means (3gc) for storage of a time step signal (TS2), which is received by the base station (2), for establishing the frequency (F_{H1}, F_{H2}) of the acknowledgement symbol (QS).

19. Device according to claim 18, **characterised by** counter means (3d) for onward counting of the time step (R1) for the purpose of synchronising a transmission of the acknowledgement symbol (QS).

## Revendications

1. Procédé de reconnaissance de l'état d'une opération de programmation dans un transpondeur ou un télécapteur dans des systèmes RFID comportant cet au moins un transpondeur ou télécapteur et au moins une station de base qui transmet des données et/ou de l'énergie au transpondeur ou au capteur au moyen d'un signal porteur, dans lequel l'opération de programmation est débutée par l'envoi d'un signal par la station de base et dans lequel, lorsque l'opération de programmation a atteint un certain état prédéfini, au moins un symbole d'acquittement est transmis de manière asynchrone au signal de la station de base par le transpondeur ou le capteur vers la station de base.

2. Procédé selon la revendication 1, **caractérisé en ce qu'**une fréquence du signal porteur est divisée pour générer une sous-porteuse et que celle-ci est utilisée comme symbole d'acquittement.

3. Procédé selon la revendication 1, **caractérisé en ce qu'**une fréquence interne d'oscillateur du transpondeur ou du capteur est divisée pour générer une sous-porteuse et que celle-ci est utilisée comme symbole d'acquittement.

4. Procédé selon l'une quelconque des revendications 1 à 3, **caractérisé en ce qu'**en fonction de l'état de l'opération de programmation une sous-porteuse à chaque fois prédéfinie est transmise comme symbole d'acquittement.

5. Procédé selon l'une quelconque des revendications 1 à 4, **caractérisé en ce qu'**un rapport de division entre le signal porteur et le signal d'acquittement ou le symbole d'acquittement lui-même sont déduits d'un symbole de données d'en-tête d'une liaison en sens inverse transmises entre la station de base et le transpondeur ou le capteur.

6. Procédé selon la revendication 5, **caractérisé en ce qu'**on utilise une définition contenue dans les données d'en-tête d'une liaison en sens inverse d'un symbole d'un "0" logique ou d'un symbole d'un "1" logique pour déduire le rapport de division.

7. Procédé selon la revendication 5, **caractérisé en ce qu'**on utilise un symbole de référence de codage contenu dans les données d'en-tête d'une liaison en sens inverse pour déduire le rapport de division.

8. Procédé selon l'une quelconque des revendications 1 à 7, **caractérisé en ce qu'**un rapport d'impulsion-pause pour la transmission du symbole d'acquittement est déduit d'un symbole de données d'entête d'une liaison en sens inverse transmises entre la station de base et le transpondeur ou le capteur.

9. Procédé selon l'une quelconque des revendications 1 à 8, **caractérisé en ce que** la transmission du symbole d'acquittement est commandée par la station de base dans une zone de fréquences à faible bruit.

10. Procédé selon l'une quelconque des revendications 1 à 9, **caractérisé en ce que** pour synchroniser la transmission du symbole d'acquittement, on reprend le comptage continu d'une unité de temps dans le transpondeur ou le capteur.

11. Procédé selon la revendication 10, **caractérisé en ce que** l'unité de temps est convenue dans une liaison en sens direct entre la station de base et le transpondeur ou le capteur.

12. Procédé selon la revendication 10 ou 11, **caractérisé en ce que** la transmission du symbole d'acquittement s'effectue après une durée n x m x R1 après libération de l'unité de temps, où n ∈ N, n > 0, RI désigne l'unité de temps et la valeur de m dépend d'un codage convenu du symbole d'acquittement, par exemple m ∈ {1/4, 1/2, 1}.

13. Procédé selon l'une quelconque des revendications 1 à 12, **caractérisé en ce que** la station de base commence d'autres étapes de processus prédéfinies en fonction du symbole d'acquittement.

14. Dispositif installé sur un transpondeur (3.1-3.4) ou télécapteur pour la commande variable dans le temps et dépendante d'un processus de la transmission de données dans des systèmes (1) RFID ou de télécapteurs comprenant au moins une station de base (2) et au moins un transpondeur (3.1-3.4) ou télécapteur, présentant :
. un oscillateur (3ga) pour produire un signal d'oscillateur dans le cas d'une première fréquence (TI) ;
. un diviseur de fréquence (3gb) pour produire un signal d'acquittement dans le cas d'au moins une deuxième fréquence (f_{H1}, f_{H2}) à partir du signal d'oscillateur ; et
. un modulateur (3gd) pour produire un symbole d'acquittement (QS) à transmettre à la station de base (2) en fonction d'un état d'une opération de programmation dans le transpondeur ou le télécapteur, l'opération de programmation étant débutée par la station de base par l'envoi d'un signal et le signal d'acquittement (QS) étant transmis de manière asynchrone au signal.

15. Dispositif selon la revendication 14, **caractérisé par** une unité de commande de modulation (3g) en liaison opérationnelle avec le diviseur de fréquence (3gb) pour commander la fréquence (f_{H1}, f_{H2}) du signal d'acquittement.

16. Dispositif selon la revendication 14 ou 15, **caractérisé en ce qu'**un mode de fonctionnement et/ou une fréquence de l'oscillateur (3ga) ou du signal d'oscillateur peut être commandé en fonction de l'état de l'opération de programmation.

17. Dispositif selon l'une quelconque des revendications 14 à 16, **caractérisé par** des moyens de commutation (3gc) pour la commutation entre un courant de modulation de données (DM) et un courant de modulation d'acquittement (QM) du transpondeur (3.1-3.4) ou du capteur.

18. Dispositif selon l'une quelconque des revendications 14 à 17, **caractérisé par** des moyens de mémorisation (3c) pour mémoriser un signal d'unité de temps (TS2) reçu de la station de base (2) pour définir la fréquence (f_{H1}, f_{H2}) du symbole d'acquittement (QS).

19. Dispositif selon la revendication 18, **caractérisé par** des moyens de comptage (3d) pour continuer le comptage de l'unité de temps (R1) aux fins de synchronisation d'une transmission du symbole d'acquittement (QS).
